(19) Europäisches Patentamt / European Patent Office / Office européen des brevets

(11) **EP 4 117 273 A1**

(12) **EUROPÄISCHE PATENTANMELDUNG**

(43) Veröffentlichungstag:
**11.01.2023  Patentblatt 2023/02**

(21) Anmeldenummer: **22000166.3**

(22) Anmeldetag: **20.06.2022**

(51) Internationale Patentklassifikation (IPC):
**H04N 5/232** (2006.01)     **H04N 5/235** (2006.01)
**G01C 21/20** (2006.01)     **G05D 1/00** (2006.01)

(52) Gemeinsame Patentklassifikation (CPC):
**H04N 5/23222; G01C 21/20; G05D 1/0088;
G05D 1/0094; H04N 5/23299; H04N 5/235**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **22.06.2021  DE 102021003196**

(71) Anmelder: **Meinhardt, Barbara
82152 Krailling (DE)**

(72) Erfinder: **Meinhardt, Ingo
82152 Krailling (DE)**

(54) **VERFAHREN ZUM OPTIMIEREN VON EIGENSCHAFTEN EINER SERIE FOTOGRAFISCHER AUFNAHMEN**

(57)     Ein Verfahren zum Optimieren von Eigenschaften einer Serie fotografischer Aufnahmen umfasst einen Verfahrensschritt zur Bildung einer Anzahl von Permutationen P aus einer Anzahl von Fotostandortdatensätzen FSD1 bis FSDn, wobei alle Fotostandortdatensätze FSDn der aktuellen Permutation Pm in einer Reihenfolge durchlaufen werden, wie sie durch die aktuelle Permutation Pm vorgegeben ist, wobei beim Durchlaufen jedes Fotostandortdatensatzes FSDn eine zeitabhängige Gesamtbewertungszahl $GBZn(T)$ als Maß für die Güte der Lichtverhältnisse zum Zeitpunkt T am Fotostandort FSn, der durch den Fotostandortdatensatz FSDn definiert ist, bestimmt wird. Durch das Aufsummieren aller zeitabhängigen Gesamtbewertungszahlen $GBZn(T)$ jedes der Fotostandortdatensätze FSDn zu einer aktuellen Permutationsbewertungszahl PBZm wird ein Gesamtmaß für die Güte der Lichtverhältnisse aller Fotostandorte FS bestimmt, die durch die Fotostandortdatensätze FSD der aktuellen Permutation Pm definiert sind. Mit der Auswahl einer Permutation Ps aus der Gesamtheit der Permutationen P anhand einer logische Bedingung kann eine Aktion zum Fotografieren einer Serie fotografischer Aufnahmen an den Fotostandorten FS, die durch die Fotostandortdatensätze FSD der ausgewählten Permutation Ps definiert sind, automatisch oder manuell erfolgen.

Fig. 8a)

EP 4 117 273 A1

**(Forts. nächste Seite)**

Fig. 8b)

S114     m = m + 1

Nein

S113     Letzte Permutation ?

Nein

PBZm > PBSW     S111

Ja

Ja

Aktion durchführen     S112

Ende

**Beschreibung**

Die vorliegende Erfindung betrifft ein Verfahren zum Optimieren von Eigenschaften einer Serie fotografischer Aufnahmen.

Die Qualität einer fotografischen Aufnahme hängt maßgeblich von den vorherrschenden Lichtverhältnissen ab. Bei Aufnahmen außerhalb von geschlossenen Gebäuden werden diese Lichtverhältnisse vom Sonnenlicht bestimmt. Von wesentlicher Bedeutung sind zunächst die aktuellen Wetterbedingungen, z.B. bedeckter Himmel, Nebel oder wolkenloser Himmel. Einfluss hat aber auch der Sonnenstand. So wirkt eine fotografische Aufnahme bei tiefstehender Sonne wesentlich ansprechender als eine identische Aufnahme zur Mittagszeit. Außerdem sind spezielle Lichtbedingungen, wie z.B. Gegenlicht oder Rückenlicht zu beachten. Weiterhin ist der Sonnenstand relativ zur Blickrichtung der Kamera zu beachten, wenn ein Polarisationsfilter verwendet wird.

Die DE 10 2011 017 564 A1 beschreibt ein Verfahren zum Ansteuern eines autonomen Fluggerätes mit Hilfe von GPS-Koordinaten zum automatischen Erstellen einer Serie fotografischer Aufnahmen.

Aus der DE 10 2019 001 910 B3 ist eine Vorrichtung und ein Verfahren zum Optimieren von Eigenschaften einer fotografischen Aufnahme bekannt, wobei anhand von GPS-Koordinaten des Fotostandortes und des Fotomotivs die Blickrichtung des Fotografen relativ zum Sonnenstand ermittelt wird. Mit Hilfe der aktuellen Uhrzeit werden außerdem der Höhenwinkel und der Einfallswinkel der Sonne auf das Fotomotiv berechnet. Diese ermittelten Daten sind die Basis zur Berechnung einer Bewertungszahl, wobei mit dem Überschreiten eines vorbestimmten Schwellenwertes die Kamera automatisch ausgelöst oder dem Fotografen das Vorliegen optimaler Bedingungen signalisiert wird.

Sobald der Fotograf jedoch eine Fotoserie mit mehreren Aufnahmen plant, muss er die unterschiedlichen Lichtverhältnisse mehrerer Fotostandorte zu unterschiedlichen Zeitpunkten berücksichtigen. Infolgedessen kann es passieren, dass einige fotografische Aufnahmen bei sehr guten Bedingungen fotografiert werden können, während für andere Aufnahmen nur ungünstige Bedingungen vorherrschen.

Aufgabe der vorliegenden Erfindung ist es, ein Verfahren anzugeben, mit dessen Hilfe für eine Serie fotografischer Aufnahmen die jeweils herrschenden Lichtverhältnisse bewertet werden, wobei die zeitliche Abfolge der einzelnen fotografischen Aufnahmen so geordnet wird, dass für die gesamte Fotoserie insgesamt optimale Lichtverhältnisse vorliegen.

Diese Aufgabe wird gelöst durch ein Verfahren gemäß Patentanspruch 1. Weitere Vorteile und Merkmale der Erfindung ergeben sich aus den Unteransprüchen sowie der Beschreibung und den beigefügten Figuren.

Eigenschaften einer fotografischen Aufnahme im Sinne der Erfindung sind Bildparameter wie beispielsweise Kontrast, Farbsättigung und/oder Farbtemperatur.

Als fotografisches Objekt im Sinne der Erfindung werden Fotomotive verstanden, deren Abbildungsqualität vorwiegend vom natürlichen Sonnenlicht bestimmt wird. Dazu gehören sowohl Architekturmotive, wie z.B. einzelne Gebäude, Teile von Gebäuden, Gebäudefassaden, Denkmäler oder technische Bauwerke als auch Landschaftsmotive, wie z.B. markante Bergketten oder andere Landschaftsstrukturen.

Als Kamera im Sinne der Erfindung werden analoge Fotoapparate, digitale Fotoapparate, mit einer Kamera ausgerüstete Mobiltelefone oder sonstige bildaufnehmende Vorrichtungen verstanden.

Erfindungsgemäß ist ein Verfahren zum Optimieren von Eigenschaften einer Serie fotografischer Aufnahmen.

Erfindungsgemäß ist innerhalb dieses Verfahrens ein Verfahrensschritt zur Bildung einer Anzahl $m$ von Permutationen $P$ aus einer Anzahl $n$ von Fotostandortdatensätzen $FSD1$ bis $FSDn$.

Erfindungsgemäß ist innerhalb dieses Verfahrens weiterhin ein Verfahrensschritt zum Durchlaufen aller $n$ Fotostandortdatensätze $FSDn$ der aktuellen Permutation $Pm$ in einer Reihenfolge, wie sie durch die aktuelle Permutation $Pm$ vorgegeben ist, wobei für jeden Fotostandortdatensatz $FSDn$ eine zeitabhängige Gesamtbewertungszahl $GBZn(T)$ als Maß für die Güte der Lichtverhältnisse zum Zeitpunkt $T$ am Fotostandort $FSn$, der durch den Fotostandortdatensatz $FSDn$ definiert ist, bestimmt wird.

Erfindungsgemäß ist innerhalb dieses Verfahrens auch ein Verfahrensschritt zum Aufsummieren aller zeitabhängigen Gesamtbewertungszahlen $GBZn(T)$ jedes der $n$ Fotostandortdatensätze $FSDn$ zu einer aktuellen Permutationsbewertungszahl $PBZm$, die der aktuellen Permutation $Pm$ zugeordnet ist, wobei die aktuelle Permutationsbewertungszahl $PBZm$ ein Gesamtmaß für die Güte der Lichtverhältnisse aller Fotostandorte $FS$ ist, die durch die Fotostandortdatensätze $FSDn$ der aktuellen Permutation $Pm$ definiert sind.

Erfindungsgemäß ist innerhalb dieses Verfahrens schließlich ein Verfahrensschritt zur Auswahl einer Permutation $Ps$ aus der Gesamtheit der $m$ Permutationen $P$, wenn eine logische Bedingung erfüllt ist, sowie das Ausführen einer Aktion zum Fotografieren einer Serie fotografischer Aufnahmen an den Fotostandorten $FS$, die durch die Fotostandortdatensätze $FSDn$ der ausgewählten Permutation $Ps$ definiert sind.

Die weiteren Ausgestaltungen des erfindungsgemäßen Verfahrens zum Optimieren von Eigenschaften einer Serie fotografischer Aufnahmen ergeben sich aus den Merkmalen der untergeordneten Ansprüche sowie aus der Beschreibung und den beigefügten Figuren.

| Fig. 1a | zeigt ein fotografisches Objekt 1 (Gebäude) mit der Objektposition OP, welches mit dem Objektwinkel OW zur Himmelsrichtung Nord (N, 8) ausgerichtet ist. |
| Fig. 1b | zeigt ein fotografisches Objekt 2 (Landschaft mit Höhenlinien) mit der Objektposition OP, welches mit dem Objektwinkel OW zur Himmelsrichtung Nord (N, 8) ausgerichtet ist. |
| Fig. 2a, 2b, 2c | zeigt das Azimut A (Horizontalwinkel) der Sonne und den Kamerawinkel KW bei verschiedenen Sonnenständen. |
| Fig. 3 | zeigt den Differenzwinkel zwischen dem Azimut A (Horizontalwinkel) der Sonne und dem Objektwinkel OW des fotografischen Objekts. |
| Fig. 4 | zeigt die Elevation E (Höhenwinkel) der Sonne Objektwinkel OW bezogen auf den Objektpunkt OP des fotografischen Objekts. |
| Fig. 5 | zeigt den Verlauf der Gesamtbewertungszahl GBZ über einen definierten Zeitraum vom Anfangszeitpunkt TA bis zum Endzeitpunkt TE. |
| Fig. 6 | zeigt eine Serie fotografischer Objekte 1 (Gebäude) mit den Objektpositionen OP1, OP2. |
| Fig. 7 | zeigt den Verlauf der Gesamtbewertungszahlen GBZ1, GBZ2 für die fotografischen Objekte 1 an den Objektpositionen OP1, OP2. |
| Fig. 8a, 8b | zeigt das erfindungsgemäße Verfahren zum Optimieren der Eigenschaften einer Serie fotografischer Aufnahmen. |

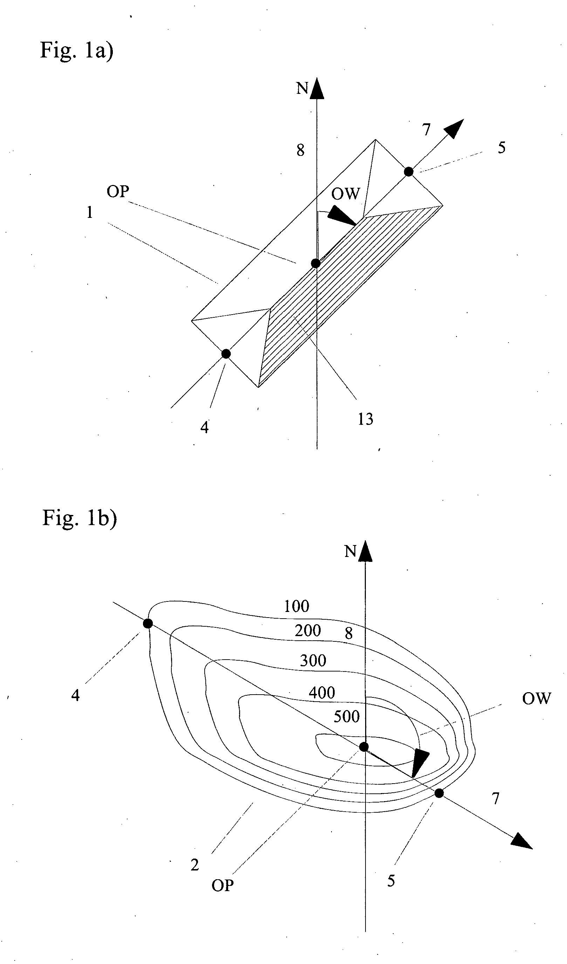

Gemäß Fig. la und Fig. 1b ist jedes fotografische Objekt 1 oder 2 durch eine Objektposition OP, d.h. die geografische Position des fotografischen Objekts 1 oder 2, in Form von GPS-Daten (Global Positioning System) gekennzeichnet. Diese GPS-Daten umfassen eine geografische Längenangabe und eine geografische Breitenangabe. Sie beziehen sich z.B. bei Gebäuden (vgl. Fig. 1a), bei Bergketten und ähnlichen Landschaftsstrukturen (vgl. Fig. 1b) auf den Flächenschwerpunkt der horizontalen Grundfläche dieser Objekte. Zur Durchführung des erfindungsgemäßen Verfahrens können diese GPS-Daten mit Hilfe einer kabellosen oder kabelgebundenen Datenverbindung aus einer beliebigen Datenbank oder von einem Online-Kartendienst gelesen werden.

Gemäß Fig. la und Fig. 1b ist jedes fotografische Objekt 1 oder 2 weiterhin durch einen Objektwinkel OW gekennzeichnet. Der Objektwinkel OW kann anhand von GPS-Daten (Global Positioning System) zweier repräsentativer Koordinaten 4 und 5 des fotografischen Objekts 1 oder 2, die die Ausrichtung (Himmelsrichtung) des fotografischen Objekts 1 oder 2 in seiner Umgebung charakterisieren, ermittelt werden. Die Verbindungslinie zwischen den Koordinaten 4 und 5, die die Längsrichtung des fotografischen Objekts 1 oder 2 repräsentieren, definiert hierbei einen Vektor 7. Die Himmelsrichtung Norden wird durch den Vektor 8 symbolisiert. Der sich zwischen den beiden Vektoren 7 und 8 aufspannende Winkel wird als Objektwinkel OW bezeichnet und zeigt die Ausrichtung (Himmelsrichtung) des fotografischen Objekts 1 oder 2 in seiner Umgebung mit einem Wertebereich von 0° bis 360°, bezogen auf die Himmelsrichtung Nord, an. Beide repräsentative Koordinaten 4 und 5 des fotografischen Objekts 1 oder 2 liegen in Form von GPS-Daten (Global Positioning Systems) vor und werden in identischer Art und Weise wie die Objektposition OP, d.h. die geografische Position des fotografischen Objekts 1 oder 2, ermittelt.

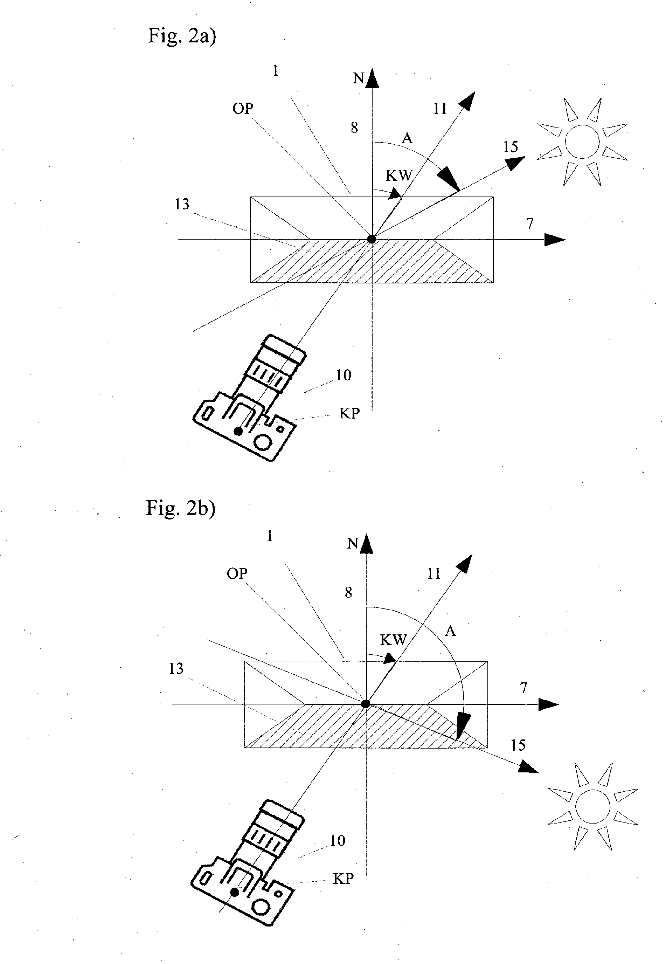

Wie in Fig. 2a bis Fig. 2c gezeigt, bildet der Kamerawinkel KW, d.h. die Blickrichtung der Kamera 10 (Himmelsrichtung), eine erste wichtige Kenngröße zur Bewertung der Eigenschaften einer fotografischen Aufnahme. Ausgangspunkt für die Berechnung des Kamerawinkels KW ist die Objektposition OP, d.h. die geografische Position des fotografischen Objekts 1 oder 2, sowie die Kameraposition KP der Kamera 10, wobei die Objektposition OP und die Kameraposition KP in Form von GPS-Daten vorliegen. Zur Durchführung des erfindungsgemäßen Verfahrens können auch die GPS-Daten zur Kameraposition KP mit Hilfe einer kabellosen oder kabelgebundenen Datenverbindung aus einer beliebigen Datenbank oder von einem Online-Kartendienst gelesen werden. Die Verbindungslinie zwischen den Koordinaten OP und KP, die den Winkel der Blickrichtung der Kamera 10 repräsentiert, bildet hierbei einen Vektor 11. Die Himmelsrichtung Norden wird wiederum durch den Vektor 8 symbolisiert. Der sich zwischen den beiden Vektoren 8 und 11 aufspannende Differenzwinkel gibt den Kamerawinkel KW der Kamera 10 (Himmelsrichtung) mit einem Wertebereich des Differenzwinkels von 0° bis 360° bezogen auf die Himmelsrichtung Nord an. Der Kamerawinkel KW stellt somit die Blickrichtung der Kamera 10 bezogen auf die Himmelsrichtung Nord dar. Die Fig. 2a bis 2c zeigen hierbei einen Kamerawinkel KW nach Nordost mit einem Wert des Differenzwinkels zwischen 0° und 90°. Alternativ zur Berechnung des Kamerawinkels KW der Kamera 10 basierend auf der Kameraposition KP der Kamera 10 und der Objektposition OP, d.h. der geografischen Position des fotografischen Objekts 1 oder 2, kann auch ein elektronischer Kompass verwendet werden.

Die Fig. 2a bis 2c zeigen eine weitere wichtige Kenngröße zur Bewertung der Eigenschaften einer fotografischen Aufnahme, den Sonnenstand der Sonne auf der Horizontalebene des Fotografen, d.h. das Azimut A (Horizontalwinkel) der Sonne. Das Azimut A der Sonne stellt einen Horizontalwinkel auf der Horizontalebene von Norden aus dar, stets bezogen auf die Objektposition OP, d.h. auf die geografische Position des fotografischen Objekts. Der sich zwischen den beiden Vektoren 8 und 15 aufspannende Differenzwinkel gibt das Azimut A (Horizontalwinkel) der Sonne mit einem Wertebereich des Differenzwinkels von 0° bis 360° (90°=Osten, 180°=Süden, 270°=Westen, 360°=Norden) an. Zur Durchführung des erfindungsgemäßen Verfahrens wird das Azimut A (Horizontalwinkel) der Sonne für ein fest vorgegebenes Datum (vorzugsweise aktuelles Datum) und für eine fest vorgegebene Uhrzeit (vorzugsweise aktuelle Uhrzeit) zum Zeitpunkt T bezogen auf die Objektposition OP, d.h. auf die geografische Position des fotografischen Objekts, berechnet. Diese Berechnung erfolgt entsprechend den gängigen Berechnungsmethoden mit Hilfe der Bestimmung der ekliptikalen Längenkoordinaten der Sonne, der Äquatorialkoordinaten der Sonne unter Berücksichtigung der Schiefe der Ekliptik und mit Hilfe der Bestimmung der Horizontalkoordinaten der Sonne unter Berücksichtigung des Greenwich-Stundenwinkels des Frühlingspunktes.

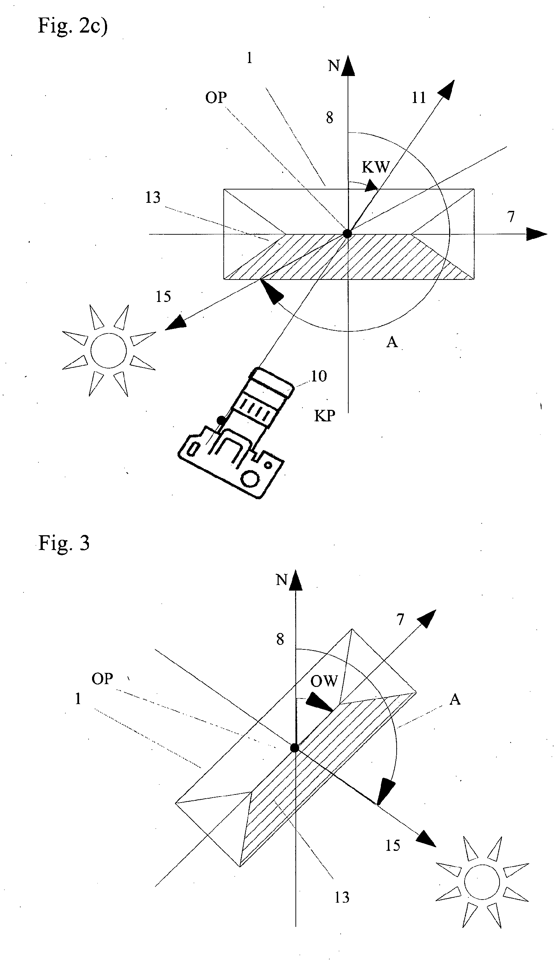

Die Bewertung der Eigenschaften einer fotografischen Aufnahme erfolgt zunächst anhand des Kamerawinkels KW und anhand des Azimuts A (Horizontalwinkel) der Sonne sowie dem sich zwischen dem Kamerawinkel KW und zwischen dem Azimut A (Horizontalwinkel) der Sonne zum Zeitpunkt T ergebenden Differenzwinkel. Dieser Differenzwinkel gibt den Sonnenstand relativ zum Kamerawinkel KW mit einem Wertebereich des Differenzwinkels von 0° bis 360° an. Bei einem Wertebereich von etwa 90° des Differenzwinkels herrscht, wie in der Fig. 2b für einen typischen Sonnenstand am Vormittag gezeigt, fotografisch günstiges Seitenlicht. Bei einem Wertebereich zwischen etwa 170° und 190° des Differenzwinkels herrscht, wie in der Fig. 2c für einen typischen Sonnenstand am Nachmittag gezeigt, fotografisch unvorteilhaftes Rückenlicht. Bei einem Wertebereich zwischen etwa 350° und 10° des Differenzwinkels herrscht, wie in der Fig. 2a für einen typischen Sonnenstand am frühen Morgen gezeigt, fotografisch äußerst unvorteilhaftes Gegenlicht.

Für die Bewertung der Eigenschaften einer fotografischen Aufnahme wird weiterhin der Einfallswinkel der Sonne auf die Vorzugsseite 13 des fotografischen Objekts für ein fest vorgegebenes Datum (vorzugsweise aktuelles Datum) und für eine fest vorgegebene Uhrzeit (vorzugsweise aktuelle Uhrzeit) zum Zeitpunkt T bezogen auf die Objektposition OP, d.h. auf die geografische Position des fotografischen Objekts, berücksichtigt. Dieser Einfallswinkel der Sonne auf die Vorzugsseite 13 des fotografischen Objekts ergibt sich, wie in Fig. 3 dargestellt, als Differentwinkel zwischen dem Azimut A (Horizontalwinkel) der Sonne und dem Objektwinkel OW, der die Ausrichtung (Himmelsrichtung) des fotografischen Objekts in seiner Umgebung definiert.

Die Berücksichtigung des Einfallswinkels der Sonne erfolgt aufgrund der Tatsache, dass unterschiedliche horizontale Einfallswinkel der Sonne auf die Vorzugsseite 13 des fotografischen Objekts unterschiedliche visuelle Eindrücke an der Vorzugsseite 13 des fotografischen Objekts hervorrufen. Beispielsweise erzeugt ein spitzer oder stumpfer, horizontaler Einfallswinkel der Sonne starke Kontraste an Oberflächenstrukturen der Vorzugsseite 13 des fotografischen Objekts, welche durch einen hohen Kontrastumfang besonders vorteilhaft für die Aussagekraft der fotografischen Aufnahme des Objekts sind. Hingegen erzeugt ein senkrechter, horizontaler Einfallswinkel der Sonne keine Kontraste an Oberflächenstrukturen der Vorzugsseite 13 des fotografischen Objekts, wodurch die fotografische Aufnahme des Objekts mit einem niedrigeren Kontrastumfang langweilig wirkt. Bei einem Wertebereich zwischen 180° und 360° des Einfallswinkels der Sonne treffen die - 7 Sonnenstrahlen auf die Rückseite des fotografischen Objekts, sodass die Vorzugsseite 13 des fotografischen Objekts im Schatten liegt.

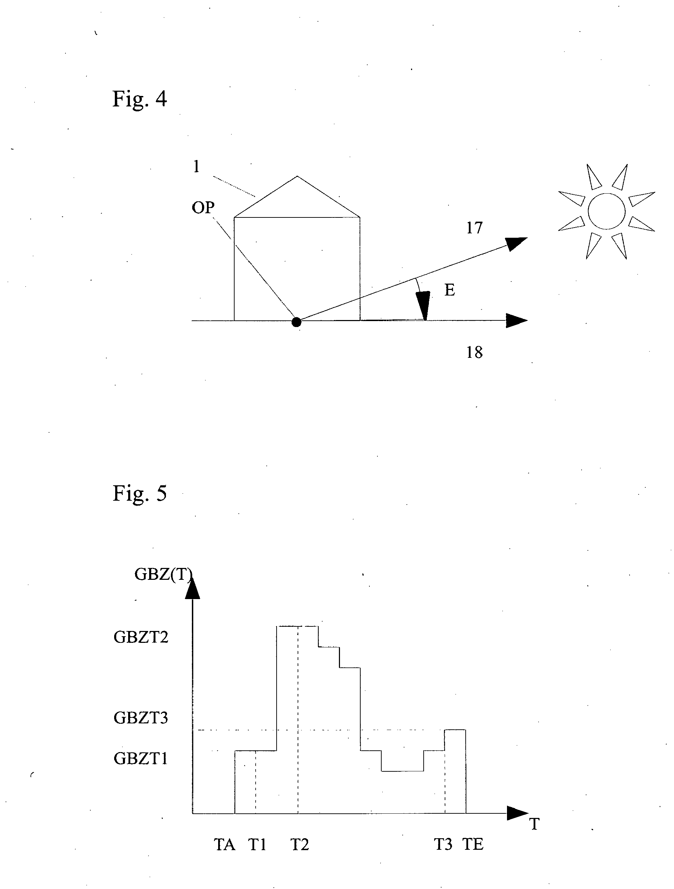

Wie in Fig. 4 dargestellt, wird für die Bewertung der Eigenschaften einer fotografischen Aufnahme weiterhin die Elevation E (Höhenwinkel) der Sonne zum Zeitpunkt T bezogen auf die Objektposition OP, d.h. auf die Position des fotografischen Objekts, berücksichtigt. Die Bewertung erfolgt aufgrund der Tatsache, dass das Sonnenlicht bei unterschiedlichen Elevationen E (Höhenwinkeln) der Sonne unterschiedliche Farbtemperaturen aufweist. Ursache hierfür ist die Filterung unterschiedlicher Anteile des Sonnenlichts in den dichten Schichten der Erdatmosphäre bei unterschiedlichen Elevationen E (Höhenwinkeln) der Sonne. Bei einem Wertebereich der Elevation E von <0° befindet sich die Sonne unterhalb des Horizonts, was aufgrund fehlenden Sonnenlichts als sehr negativ bewertet wird. Bei einem Wertebereich der Elevation E zwischen 0° und 10° befindet sich die Sonne leicht oberhalb des Horizonts. Diese Lichtsituation tritt unmittelbar nach dem Sonnenaufgang bzw. unmittelbar vor dem Sonnenuntergang auf und wird aufgrund der rötlichen (sehr warmen) Farbtemperatur des Sonnenlichts als sehr positiv bewertet. Bei einem Wertebereich der Elevation E zwischen 10° und 40° scheint die Sonne in einem flachen bis mittelflachen Einfallswinkel auf das fotografische Objekt. Diese Lichtsituation tritt am Vormittag bzw. am Nachmittag auf und wird aufgrund der gelblichen (warmen) Farbtemperatur des Sonnenlichts als positiv bewertet. Bei einem Wertebereich der Elevation E zwischen 40° und 60° scheint die Sonne in einem steilen Einfallswinkel auf das fotografische Objekt. Diese Lichtsituation tritt am späten Vormittag bzw. am frühen Nachmittag auf und wird aufgrund der neutralen Farbtemperatur des Sonnenlichts als neutral bewertet. Bei einem Wertebereich der Elevation E von >60° steht die Sonne in der Nähe des Zenits. Diese Lichtsituation tritt in den Mittagsstunden auf und wird aufgrund der bläulichen (kalten) Farbtemperatur des Sonnenlichts als negativ bewertet.

Die beschriebenen Kenngrößen zur Bewertung der Eigenschaften einer fotografischen Aufnahme zum Zeitpunkt T, umfassend den sich zwischen dem Kamerawinkel KW und zwischen dem Azimut A (Horizontalwinkel) der Sonne ergebenden Differenzwinkel, den Einfallswinkel der Sonne auf die Vorzugsseite 13 des fotografischen Objekts und die Elevation E (Höhenwinkel) der Sonne, sind nur dann relevant, wenn zum Zeitpunkt T auch die entsprechenden Wetterbedingungen vorherrschen. So kann eine Bewertung von Azimut A (Horizontalwinkel) und Elevation E (Höhenwinkel) der Sonne bezogen auf die Objektposition OP, d.h. auf die Position des fotografischen Objekts, entfallen, wenn zum Zeitpunkt T bedeckter Himmel vorherrscht.

Zur Durchführung des erfindungsgemäßen Verfahrens können die zum Zeitpunkt T an der Objektposition OP vorherrschenden Wetterbedingungen automatisch ermittelt werden. Dies kann beispielsweise mit Hilfe einer Kamera durch eine Messung der aktuellen Lichtverhältnisse erfolgen, indem durch eine bestimmte Lichtintensität und/oder durch eine bestimmte Farbtemperatur des Umgebungslichts zwischen wolkenlosem, bewölktem oder bedecktem Himmel unterschieden wird. Je nach Messgenauigkeit sind bei der Bestimmung der aktuell vorherrschenden Wetterbedingungen beliebig feine Abstufungen möglich. Alternativ können im Rahmen des erfindungsgemäßen Verfahrens entsprechende Wetterdaten, bezogen auf die Objektposition OP, auch über eine kabellose oder kabelgebundene Datenverbindung aus einer beliebigen Wetterdatenbank empfangen werden. Damit fließen die an der Objektposition OP aktuell vorherrschenden oder zu erwartenden Wetterbedingungen in die Bewertung der Eigenschaften einer fotografischen Aufnahme mit ein.

Sämtliche Kenngrößen zur Bewertung der Eigenschaften einer fotografischen Aufnahme zum Zeitpunkt T, umfassend den sich zwischen dem Kamerawinkel KW und zwischen dem Azimut A (Horizontalwinkel) der Sonne ergebenden Differenzwinkel, den Einfallswinkel der Sonne auf die Vorzugsseite 13 des fotografischen Objekts, die Elevation E (Höhenwinkel) der Sonne und Wetterdaten an der Objektposition OP führen nach einer gewichteten oder ungewichteten Verknüpfung zur Berechnung einer Gesamtbewertungszahl GBZ, gültig für den Zeitpunkt T. Die detaillierte Beschreibung einer Vorrichtung und eines Verfahrens für die Berechnung einer derartigen Gesamtbewertungszahl GBZ zur Bewertung der Eigenschaften einer fotografischen Aufnahme ist in der Patentschrift DE 10 2019 001 910 B3 zu finden, deren Beschreibung und Zeichnungen ausdrücklich zum Offenbarungsgehalt der vorliegenden Erfindung zuzurechnen sind.

Die errechnete Gesamtbewertungszahl GBZ zur Bewertung der Eigenschaften einer fotografischen Aufnahme, gültig für den Zeitpunkt T, bildet die Basis für die Durchführung des erfindungsgemäßen Verfahrens zum Optimieren von Eigenschaften einer Serie fotografischer Aufnahmen. Diese Gesamtbewertungszahl GBZ ist abhängig vom aktuellen Zeitpunkt T und kann über einen definierten Zeitraum als Kurvenverlauf dargestellt werden, beginnend mit dem Anfangszeitpunkt TA und endend mit dem Endzeitpunkt TE, wie in Fig. 5 gezeigt. Dieser Kurvenverlauf stellt die Veränderung der Gesamtbewertungszahl GBZ für eine einzelne fotografische Aufnahme über den Tagesverlauf dar, wobei der Anfangszeitpunkt TA typischerweise durch den Sonnenaufgang und der Endzeitpunkt TE typischerweise durch den Sonnenuntergang definiert wird. Der Zeitpunkt T1 im Kurvenverlauf der Fig. 5 repräsentiert beispielsweise den in der Fig. 2a gezeigten Sonnenstand kurz nach Sonnenaufgang. Aufgrund der zum Zeitpunkt T1 vorliegenden Gegenlichtsituation, werden die zum Zeitpunkt T1 vorherrschenden Lichtverhältnisse mit einer niedrigen Gesamtbewertungszahl GBZT1 als schlecht bewertet. Dagegen steht die Sonne zum Zeitpunkt T2 seitlich zur Kamerablickrichtung, wie beispielsweise in der Fig. 2b verdeutlicht. Dieses fotografisch sehr vorteilhafte Seitenlicht zum Zeitpunkt T3 ist durch den Anstieg der Kurve GBZ(T) in der Fig. 5 erkennbar und wird mit einer hohen Gesamtbewertungszahl GBZT2 als sehr gut bewertet. Zum Zeitpunkt T3 steht die Sonne, wie in der Fig. 2c gezeigt, nahezu im Rücken des Fotografen und sorgt damit für kontrastarme, wenig ausdrucksstarke Fotos. Diese wiederum schlechteren Lichtverhältnisse zum Zeitpunkt T3 werden jedoch weniger negativ bewertet als die Gegenlichtsituation zum Zeitpunkt T1, sodass die Gesamtbewertungszahl GBZT3 die vorherrschenden Lichtverhältnisse zum Zeitpunkt T3 als mäßig bewertet und damit geringfügig besser als die vorherrschenden Lichtverhältnisse zum Zeitpunkt T1.

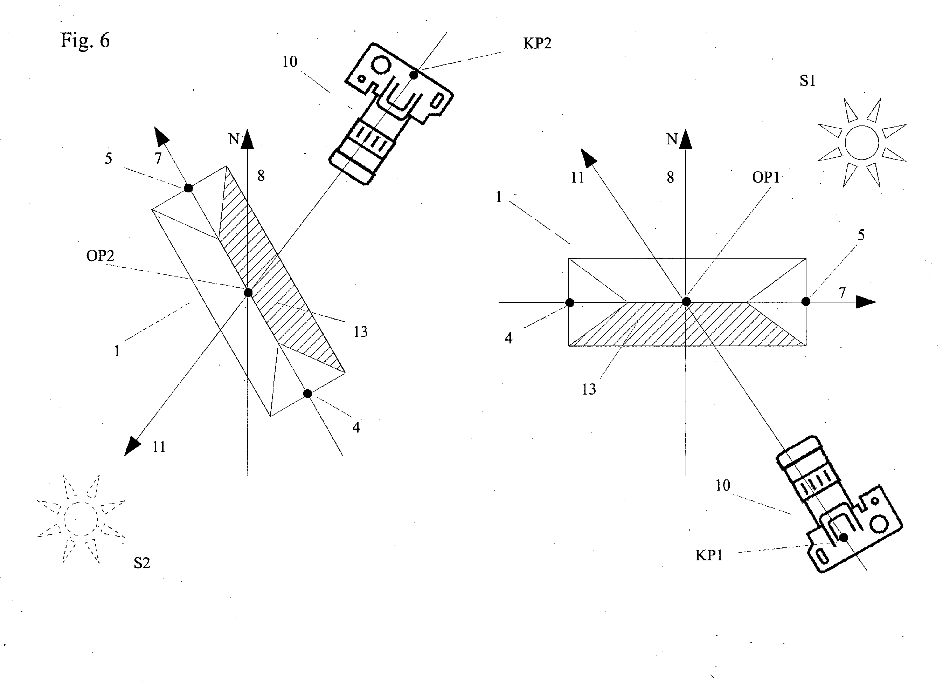

Möchte der Fotograf nun den Zeitpunkt T ermitteln, an dem die optimalen Lichtverhältnisse für eine einzelne fotografische Aufnahme vorherrschen, so kann dieser Zeitpunkt leicht in der Kurve der Gesamtbewertungszahl GBZ (siehe Fig. 5) abgelesen werden. Schwieriger wird die Aufgabenstellung jedoch, sobald der Fotograf mehrere fotografische Aufnahmen unterschiedlicher Fotomotive mit unterschiedlichen Lichtverhältnissen zu verschiedenen Zeitpunkten innerhalb eines definierten Zeitraums anfertigen möchte. Verdeutlicht wird dieses Problem anhand von Fig. 6, wo eine Serie fotografischer Aufnahmen, bestehend aus einem ersten Fotomotiv mit der Objektposition OP1 und der Kameraposition KP1 sowie aus einem zweiten Fotomotiv mit der Objektposition OP2 und der Kameraposition KP2, fotografiert werden soll. Der Fotograf steht hier vor der Entscheidung, welches der beiden Fotomotive beim Sonnenstand S1 und welches der beiden Fotomotive beim Sonnenstand S2 zu fotografieren ist, um jedes der Fotomotive dieser Serie fotografischer Aufnahmen bei optimalen Lichtverhältnissen abzubilden.

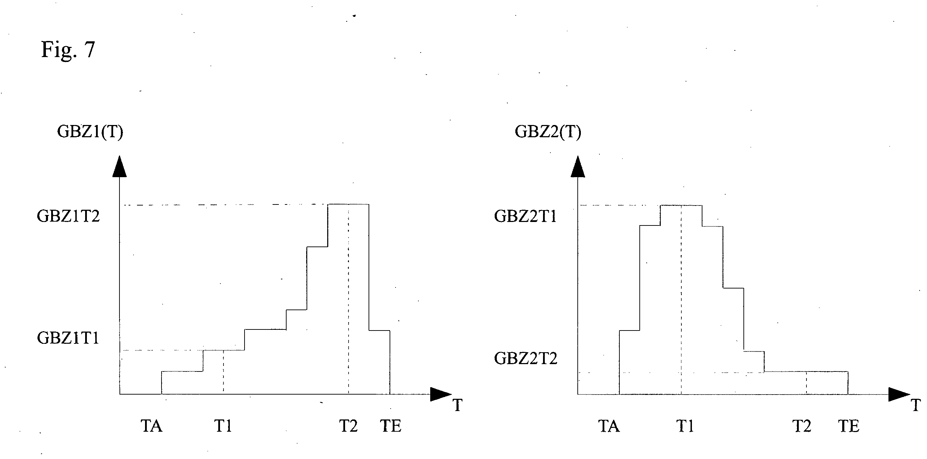

Wie in Fig. 6 gezeigt wird, herrschen am ersten Fotomotiv mit der Objektposition OP1 und der Kameraposition KP1 zum Sonnenstand S1, typischerweise am frühen Morgen, ungünstige Lichtverhältnisse, da die fotografische interessante Seite 13 des Fotomotivs zu diesem Zeitpunkt auf der sonnenabgewandten Seite des fotografischen Objekts 1 im Schatten liegt. Beim Sonnenstand S2 hingegen liegt die fotografische interessante Seite 13 des Fotomotivs in der Sonne und mit der Kamerablickrichtung 11 an der Kameraposition KP1 herrscht vorteilhaftes Seitenlicht. Diese zeitliche Veränderung der Lichtverhältnisse vom Sonnenstand S1 (Zeitpunkt T1) zum Sonnenstand S2 (Zeitpunkt T2) am ersten Fotomotiv mit der Objektposition OP1 und der Kameraposition KP1 wird in der Fig. 7 durch den Kurvenverlauf der Gesamtbewertungszahl GBZ1(T) verdeutlicht. Die Gesamtbewertungszahl GBZ1(T) weist zum Zeitpunkt T1 (Sonnenstand S1 in der Fig. 6) einen sehr kleinen Wert auf, während zum Zeitpunkt T2 (Sonnenstand S2 in der Fig. 6) die Gesamtbewertungszahl GBZ1(T) aufgrund der sehr guten Lichtverhältnisse zum Zeitpunkt T2 ein Maximum erreicht.

Wie in Fig. 6 gezeigt wird, herrschen am zweiten Fotomotiv mit der Objektposition OP2 und der Kameraposition KP2 zum Sonnenstand S1, typischerweise am frühen Morgen, sehr gute Lichtverhältnisse, da die fotografisch interessante Seite 13 des Fotomotivs zu diesem Zeitpunkt in der Sonne liegt und nahezu besonders vorteilhaftes Seitenlicht vorherrscht. Beim Sonnenstand S2 hingegen liegt die fotografische interessante Seite 13 des Fotomotivs auf der sonnenabgewandten Seite des fotografischen Objekts 1 im Schatten. Zudem liegt hier mit der Kamerablickrichtung 11 an der Kameraposition KP2 eine äußerst ungünstige Gegenlichtsituation vor. Diese zeitliche Veränderung der Lichtverhältnisse vom Sonnenstand S1 (Zeitpunkt T1) zum Sonnenstand S2 (Zeitpunkt T2) am zweiten Fotomotiv mit der Objektposition OP2 und der Kameraposition KP2 wird in der Fig. 7 durch den Kurvenverlauf der Gesamtbewertungszahl GBZ2(T) verdeutlicht. Die Gesamtbewertungszahl GBZ2(T) erreicht zum Zeitpunkt T1 (Sonnenstand S1 in der Fig. 6) ein Maximum, während zum Zeitpunkt T2 (Sonnenstand S2 in der Fig. 6) die Gesamtbewertungszahl GBZ2(T) aufgrund der sehr schlechten Lichtverhältnisse zum Zeitpunkt T2 ein Minimum aufweist.

Möchte der Fotograf nun die in der Fig. 6 gezeigte Serie von Fotomotiven, bestehend aus den Objektpositionen OP1, OP2 und den Kamerapositionen KP1, KP2 fotografieren, so muss er sich im Hinblick auf ein optimales Ergebnis dahingehend entscheiden, welches der beiden Fotomotive beim Sonnenstand S1 (Zeitpunkt T1) bzw. beim Sonnenstand 2 (Zeitpunkt T2) zu fotografieren ist. Entscheidet sich der Fotograf mit der Variante a dafür, das erste Fotomotiv mit der Objektposition OP1 und der Kameraposition KP1 zum Zeitpunkt T1, d.h. am frühen Morgen zum Sonnenstand S1, und das zweite Fotomotiv mit der Objektposition OP2 und der Kameraposition KP2 zum Zeitpunkt T2, d.h. am Nachmittag zum Sonnenstand S2, zu fotografieren, so ergibt sich entsprechend den Kurvenverläufen in der Fig. 7 eine Gesamtbewertungszahl

$$GBZa = GBZ1T1 + GBZ2T2.$$

Im umgekehrten Fall, falls sich der Fotograf mit der Variante b dafür entscheidet, das zweite Fotomotiv mit der Objektposition OP2 und der Kameraposition KP2 zum Zeitpunkt T1, d.h. am frühen Morgen zum Sonnenstand S1, und das erste Fotomotiv mit der Objektposition OP1 und der Kameraposition KP1 zum Zeitpunkt T2, d.h. am Nachmittag zum Sonnenstand S2, zu fotografieren, so ergibt sich entsprechend den Kurvenverläufen in der Fig. 7 eine Gesamtbewertungszahl

$$GBZb = GBZ2T1 + GBZ1T2.$$

Aus den Kurvenverläufen in der Fig. 7 ist sofort erkennbar, dass die Gesamtbewertungszahl GBZb der Variante b wesentlich größer ist als die Gesamtbewertungszahl GBZa der Variante a. Durch Vergleich der Werte der Gesamtbewertungszahlen beider Varianten erkennt der Fotograf aufgrund der Beziehung GBZb > GBZa, dass es wesentlich vorteilhafter ist, beide Fotomotive entsprechend der Variante b zu fotografieren, d.h. das zweite Fotomotiv mit der Objektposition OP2 und der Kameraposition KP2 zum Zeitpunkt T1 beim Sonnenstand S1 und das erste Fotomotiv mit der Objektposition OP1 und der Kameraposition KP1 zum Zeitpunkt T2 beim Sonnenstand S2.

Die Varianten a und b, die die unterschiedliche zeitliche Zuordnung dieser beispielhaften Serie von zwei Fotomotiven darstellen, lassen sich durch eine Permutation der entsprechenden Fotostandortdatensätze FSD1 und FSD2 bilden. Der Fotostandortdatensatz FSD1 des ersten Fotomotivs enthält die Objektposition OP1 und die Kameraposition KP1, der Fotostandortdatensatz FSD2 des zweiten Fotomotivs enthält die Objektposition OP2 und die Kameraposition KP2. Die Varianten a und b ergeben sich daher aus den Permutationen P1(FSD1, FSD2) und P2(FSD2, FSD1). Die Reihenfolge der Fotostandortdatensätze FSDn innerhalb einer Permutation P definiert hierbei die zeitliche Reihenfolge (vgl. Zeitpunkt T1 und T2) beim Fotografieren der zugehörigen Fotomotive. Da sich bei dieser beispielhaften Fotoserie mit lediglich zwei Fotomotiven nur zwei Permutationen P ergeben, kann der Fotograf schnell überblicken, welches der beiden Fotomotive zum Zeitpunkt T1 bzw. T2 zu fotografieren ist.

Soll jedoch eine Serie mit einer Vielzahl fotografischer Aufnahmen optimiert werden, so kann der Fotograf diesen Anwendungsfall aufgrund der exponentiell ansteigenden Anzahl an Permutationen P und dem damit steigenden Rechenaufwand nicht mehr überblicken.

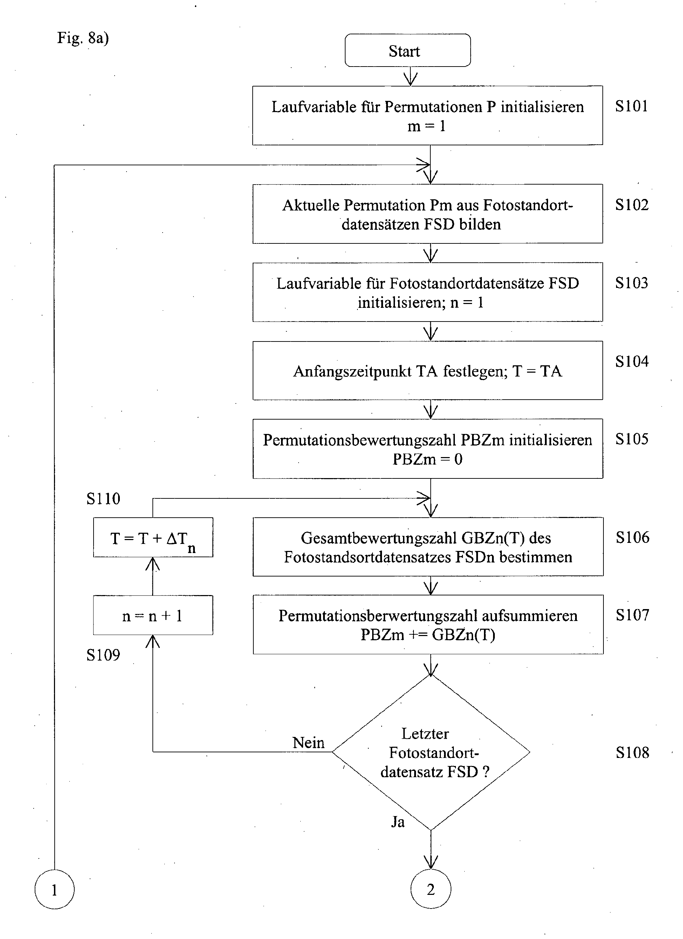

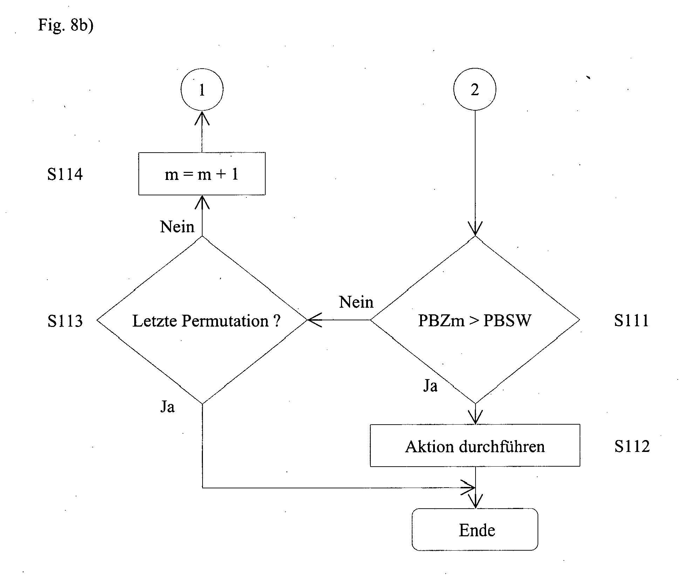

Diese Aufgabe wird durch das erfindungsgemäße Verfahren zum Optimieren von Eigenschaften einer Serie fotografischer Aufnahmen gelöst. Die Figuren 8a und 8b zeigen die einzelnen Verfahrensschritte des erfindungsgemäßen Verfahrens. Grundlage dieses Verfahrens ist die Bildung einer Anzahl m von Permutationen P aus einer Anzahl n von Fotostandortdatensätzen FSD1 bis FSDn, wobei sich die Anzahl m der Permutationen aus der Beziehung

$$m = n!$$

ergibt. Eine beispielhafte Serie mit drei fotografischen Aufnahmen enthält daher n = 3 Fotostandortdatensätze FSD1, FSD2, FSD3, womit sich die Anzahl m der Permutationen P aus der Beziehung

$$m = 3! = 6$$

berechnen lässt.

Damit wird das erfindungsgemäße Verfahren bei einer beispielhaften Serie von drei fotografischen Aufnahmen für die folgenden sechs Permutationen P1 bis P6 in einer Schleife durchlaufen:

P1 = (FSD1, FSD2, FSD3)
P2 = (FSD1, FSD3, FSD2)
P3 = (FSD2, FSD1, FSD3)
P4 = (FSD2, FSD3, FSD1)
P5 = (FSD3, FSD1, FSD2)
P6 = (FSD3, FSD2, FSD1)

Hierbei entspricht die Reihenfolge der beispielhaften drei Fotostandortdatensätze FSD1, FSD2 und FSD3 innerhalb der jeweiligen Permutation P1 bis P6 genau der Reihenfolge, wie sie der zeitlichen Abfolge beim Fotografieren der zugehörigen Fotomotive innerhalb der beispielhaften Fotoserie entspricht und beim Durchführen der Aktion im Verfahrensschritt S112 durchlaufen wird.

Das erfindungsgemäße Verfahren wird in mehreren Schleifen durchlaufen, wobei die Anzahl m der Schleifendurchläufe exakt der Anzahl der Permutationen Pm entspricht. Daher erfolgt im Verfahrensschritt S101 zunächst die Initialisierung der Laufvariablen m, die als Index für die aktuelle zu bearbeitende Permutation Pm und gleichzeitig als Schleifenzähler m verwendet wird.

Im Verfahrensschritt S102 wird die aktuelle Permutation Pm des jeweiligen Schleifendurchlaufs m aus den Fotostandortdatensätzen FSD1 bis FSDn gebildet. Wie bereits erwähnt, entspricht die Reihenfolge der Fotostandortdatensätze FSD1 bis FSDn innerhalb der aktuellen Permutation Pm genau der Reihenfolge, wie sie der zeitlichen Abfolge beim Fotografieren der zugehörigen Fotomotive innerhalb einer Fotoserie entsprechen würde und wie sie beim Durchführen der Aktion im Verfahrensschritt S112 durchlaufen wird. Zum Optimieren der Eigenschaften einer Serie fotografischer Aufnahmen, die durch die aktuelle Permutation Pm repräsentiert wird, erfolgt die Bestimmung der fotografischen Eigenschaften der einzelnen Fotostandortdatensätze FSD1 bis FSDn der aktuellen Permutation Pm in mehreren, inneren Schleifendurchläufen, wobei die Anzahl der Schleifendurchläufe exakt der Anzahl n der Fotostandortdatensätze FSD1 bis FSDn entspricht. Hierbei werden alle Fotostandortdatensätze FSD1 bis FSDn genau in der Reihenfolge durchlaufen, wie sie die aktuelle Permutation Pm vorgibt.

Vor dem Beginn der inneren Schleifendurchläufe werden in den Verfahrenschritten S103 bis S105 die Laufvariable n für die inneren Schleifendurchläufe, die der Anzahl der inneren Schleifendurchläufe entspricht, der Anfangszeitpunkt T = TA und die für die aktuelle Permutation Pm gültige Permutationsbewertungszahl PBZm initialisiert.

Im Verfahrensschritt S106 erfolgt die Berechnung der zeitabhängigen Gesamtbewertungszahl GBZn(T) des aktuellen Fotostandortdatensatzes FSDn der aktuellen Permutation Pm zum Zeitpunkt T. Die zeitabhängige Gesamtbewertungszahl GBZn(T) ist ein Maß für die Güte der Lichtverhältnisse am Fotostandort n zum Zeitpunkt T entsprechend den Erläuterungen zu den Figuren 5, 6 und 7. Die detaillierte Beschreibung einer Vorrichtung und eines Verfahrens für die Berechnung einer derartigen Gesamtbewertungszahl GBZ zur Bewertung der Eigenschaften einer fotografischen Aufnahme ist in der Patentschrift DE 10 2019 001 910 B3 zu finden. Da die Verfahrensschritte S106 bis S110 für alle Fotostandortdatensätze FSDn der aktuellen Permutation Pm in einer Schleife durchlaufen werden und der Zeitpunkt T bei jedem Schleifendurchlauf mit einer Zeitdifferenz ΔT beaufschlagt wird, ist sofort erkennbar, dass die zeitabhängigen Gesamtbewertungszahlen GBZn(T) aller Fotostandortdatensätze FSDn der aktuellen Permutation Pm jeweils für einen aufsteigenden Zeitpunkt T berechnet werden.

Im Verfahrensschritt S107 wird die Permutationsbewertungszahl PBZm der aktuellen Permutation Pm mit der im vorhergehenden Verfahrensschritt S106 berechneten, zeitabhängigen Gesamtbewertungszahl GBZn(T) des aktuellen Fotostandortdatensatzes FSDn beaufschlagt. Damit enthält die Permutationsbewertungszahl PBZm nach Durchlaufen der Schleife aller Fotostandortdatensätze FSDn, bestehend aus den Verfahrensschritten S106 bis S110, die Summe aller zeitabhängigen Gesamtbewertungszahlen GBZn(T) aller Fotostandortdatensätze FSDn der aktuellen Permutation Pm.

Im Verfahrensschritt S108 erfolgt die Abfrage, ob in der aktuellen Permutation Pm bereits alle Fotostandortdatensätze FSDn durchlaufen wurden, um deren zeitabhängige Gesamtbewertungszahl GBZn(T) zu berechnen und zur Permutationsbewertungszahl PBZm aufzusummieren. Trifft dies nicht zu, so wird die Laufvariable n zum Indizieren des aktuellen Fotostandortdatensatzes FSDn im Verfahrensschritt S109 um den Wert 1 inkrementiert. In diesem Fall wird außerdem der Zeitwert für den Zeitpunkt T um die Zeitdifferenz ΔT inkrementiert. Diese Zeitdifferenz ΔT entspricht genau der Zeitdauer, die zum Fotografieren an der Kameraposition KPn des vom Fotostandortdatensatz FSDn definierten Fotomotivs benötigt wird, zuzüglich einer entfernungs- und verkehrsmittelabhängigen Zeitdauer für die Fortbewegung von der Kameraposition KPn des vom Fotostandortdatensatz FSDn definierten Fotomotivs hin zur Kameraposition KPn+1 des vom Fotostandortdatensatz FSDn+1 definierten Fotomotivs. Damit erfolgt im Verfahrensschritt S106 die Berechnung der zeitabhängigen Gesamtbewertungszahl GBZn(T) aller Fotostandortdatensätze FSDn der aktuellen Permutation Pm in einem Zeitschema, wie es beim Durchlaufen aller Fotostandorte der aktuellen Permutation Pm durch einen Fotografen im Rahmen einer Fototour geschehen würde.

Wurde im Verfahrensschritt S108 dagegen festgestellt, dass in der aktuellen Permutation Pm die Berechnung der zeitabhängigen Gesamtbewertungszahl GBZn(T) aller Fotostandortdatensätze FSDn und deren Aufsummierung zur Permutationsbewertungszahl PBZm bereits erfolgte, so wird das erfindungsgemäße Verfahren mit dem Verfahrensschritt S111 fortgesetzt. Im Verfahrensschritt S111 erfolgt ein Vergleich, ob die Permutationsbewertungszahl PBZm der aktuellen Permutation Pm, d.h. die Summe aller zeitabhängigen Gesamtbewertungszahlen GBZn(T) aller Fotostandortdatensätze FSDn der aktuellen Permutation Pm, einen vorgegebenen Permutationsbewertungsschwellenwert PBSW überschreitet. Hierbei stellt die Permutationsbewertungszahl PBZm, wie am Beispiel der Gesamtbewertungszahlen GBZa und GBZb in der Fig. 7 bereits erläutert, ein Maß für die gesamte Güte der Lichtverhältnisse an den Fotostandorten, die durch die Fotostandortdatensätze FSDn definiert sind, dar. Dieses Maß für die Güte der Lichtverhältnisse ist abhängig von den Zeitpunkten T, für die die zeitabhängige Gesamtbewertungszahl GBZn(T) jedes Fotostandortdatensatzes FSDn der aktuellen Permutation Pm berechnet wurde, und zwar in der durch die aktuelle Permutation Pm vorgegebenen Reihenfolge der Fotostandortdatensätze FSDn.

Wird im Verfahrensschritt S111 ermittelt, dass die Permutationsbewertungszahl PBZm der aktuellen Permutation Pm den vorgegebenen Permutationsbewertungsschwellenwert PBSW überschreitet, so bewertet das erfindungsgemäße Verfahren die aktuelle Permutation Pm als hinreichend optimiert und bezeichnet diese aktuelle Permutation Pm als ausgewählte Permutation Ps. Würde z.B. die bereits beschriebene Permutation P3 mit der Reihenfolge der Fotostandortdatensätze FSD2, FSD1 und FSD3 zu den Zeitpunkten T1, T2 und T3 als hinreichend optimiert bewertet werden, so kann eine entsprechende Serie fotografischer Aufnahmen beginnend am zweiten Fotostandort (definiert durch FSD2) zum Zeitpunkt T1, dann am ersten Fotostandort (definiert durch FSD1) zum Zeitpunkt T2 und endend am dritten Fotostandort (definiert durch FSD3) zum Zeitpunkt T3 als eine Serie fotografischer Aufnahmen mit optimierten Eigenschaften im Sinne der Erfindung betrachtet werden.

Liegt eine derartige ausgewählte Permutation Ps vor, die eine Serie fotografischer Aufnahmen mit optimierten Eigenschaften repräsentiert, so führt das erfindungsgemäße Verfahren im Verfahrensschritt S112 eine Aktion zum Fotografieren dieser Serie fotografischer Aufnahmen, deren Reihenfolge durch die ausgewählte Permutation Ps vorgeben wird, automatisch durch. Für die Durchführung dieser Aktion müssen in einem nicht näher dargestellten Verfahrensschritt zunächst die Fotostandortdatensätze FSD1 bis FSDn der ausgewählten Permutation Ps ermittelt werden. Wesentlicher Bestandteil dieser Fotostandortdatensätze FSD1 bis FSDn ist, wie bereits bei den Erläuterungen zur Fig. 6 dargelegt, die Kameraposition KP, bestehend aus GPS-Koordinaten mit einem Wert für die geografische Breite (Latitude) und einem Wert für die geografische Länge (Longitude). Wird z.B. die bereits beschriebene Permutation P3 mit der Reihenfolge der Fotostandortdatensätze FSD2, FSD1 und FSD3 im Verfahrensschritt S111 als hinreichend optimiert bewertet, so dienen die GPS-Koordinaten der Kamerapositionen KPn der Fotostandortdatensätze FSD2, FSD1 und FSD3 im Rahmen der im Verfahrensschritt S112 durchzuführenden Aktion als Routinginformationen. Entsprechend der in der beispielhaften Permutation P3 vorgegebenen Reihenfolge der Fotostandortdatensätze FSD2, FSD1 und FSD3 ergibt sich bei der im Verfahrensschritt S112 durchzuführenden Aktion eine Route beginnend an der zweiten Kameraposition KP2 (definiert durch FSD2) zum Zeitpunkt T1, weiter zur ersten Kameraposition KP1 (definiert durch FSD1) zum Zeitpunkt T2 und endend an der dritten Kameraposition KP3 (definiert durch FSD3) zum Zeitpunkt T3. Hierbei stellt der Zeitpunkt T1 den Anfangszeitpunkt TA dar. Der Zeitpunkt T2 ergibt sich aus dem Zeitpunkt T1 zuzüglich der Zeitdauer TKP2, die zum Fotografieren des Fotomotivs an der Kameraposition KP2 benötigt wird, zuzüglich der entfernungs- und verkehrsmittelabhängigen Fortbewegungsdauer TF21 von der aktuellen Kameraposition KP2 zur nächsten Kameraposition KP1. Der Zeitpunkt T3 ergibt sich analog aus dem Zeitpunkt T2 zuzüglich der Zeitdauer TKP1, die zum Fotografieren des Fotomotivs an der Kameraposition KP1 benötigt wird, zuzüglich der entfernungs- und verkehrsmittelabhängigen Fortbewegungsdauer TF13 von der aktuellen Kameraposition KP1 zur nächsten Kameraposition KP3. Der Endzeitpunkt TE errechnet sich schließlich aus dem Zeitpunkt T3 zuzüglich der Zeitdauer TKP3, die zum Fotografieren des Fotomotivs an der Kameraposition KP3 benötigt wird.

$$T1 = TA$$

$$T2 = T1 + TKP2 + TF21$$

$$T3 = T2 + TKP1 + TF13$$

$$TE = T3 + TKP3$$

Die im Verfahrensschritt S112 automatisch durchzuführende Aktion kann das Ansteuern eines autonom gesteuerten Fortbewegungsmittels, z.B. ein autonom gesteuertes Fahrzeug oder ein autonom gesteuertes Fluggerät, beinhalten. Hierbei kann die Kamera 10 mit Hilfe des autonom gesteuerten Fortbewegungsmittels zu den GPS-Koordinaten der einzelnen Kamerapositionen KPn, die in den Fotostandortdatensätzen FSDn der ausgewählten Permutation Ps gespeichert sind, automatisch transportiert werden. Eine Steuerungsvorrichtung kann dann die Kamera 10 beim Erreichen der GPS-Koordinaten der jeweiligen Kameraposition KPn automatisch auslösen. Die aktuelle Position des autonom gesteuerten Fortbewegungsmittels kann mit Hilfe von GPS-Daten ermittelt werden, die über eine kabellose Datenverbindung aus einer beliebigen Datenbank oder von einem Online-Kartendienst einlesbar sind.

Die im Verfahrensschritt S112 automatisch durchzuführende Aktion kann auch das Ansteuern eines autonom gesteuerten Fortbewegungsmittels beinhalten, um einen Fotografen mit der Kamera 10 zu den GPS-Koordinaten der einzelnen Kamerapositionen KPn, die in den Fotostandortdatensätzen FSDn der ausgewählten Permutation Ps gespeichert sind, automatisch zu transportieren. Eine Anzeigevorrichtung kann den Fotografen dann beim Erreichen der GPS-Koordinaten der jeweiligen Kameraposition KPn automatisch informieren und ihn zum Auslösen der Kamera 10 automatisch auffordern. Die aktuelle Position des autonom gesteuerten Fortbewegungsmittels kann auch in diesem Fall mit Hilfe von GPS-Daten ermittelt werden, die über eine kabellose Datenverbindung aus einer beliebigen Datenbank oder von einem Online-Kartendienst einlesbar sind.

Die im Verfahrensschritt S112 automatisch durchzuführende Aktion kann alternativ das Anzeigen der GPS-Koordinaten der einzelnen Kamerapositionen KPn, die in den Fotostandortdatensätzen FSDn der ausgewählten Permutation Ps gespeichert sind, mit Hilfe einer Anzeigevorrichtung beinhalten. Der Fotograf ist anhand der von der Anzeigevorrichtung angezeigten GPS-Koordinaten der einzelnen Kamerapositionen KPn in der Lage, sich selbständig zu Fuß oder mit Hilfe eines Fortbewegungsmittels zu den einzelnen Kamerapositionen KPn, die in den Fotostandortdatensätzen FSDn der ausgewählten Permutation Ps gespeichert sind, zu bewegen. Die Anzeigevorrichtung kann den Fotografen auch in diesem Ausführungsbeispiel beim Erreichen der jeweiligen Kameraposition KPn automatisch informieren und ihn zum Auslösen der Kamera 10 automatisch auffordern. Die aktuelle Position des autonom gesteuerten Fortbewegungsmittels kann wiederum mit Hilfe von GPS-Daten ermittelt werden, die über eine kabellose Datenverbindung aus einer beliebigen Datenbank oder von einem Online-Kartendienst einlesbar sind.

Bei allen Varianten der im Verfahrensschritt S112 auszulösenden Aktionen wird das Erreichen der GPS-Koordinaten der jeweiligen Kameraposition KPn genau dann festgestellt, wenn die Distanz des aktuellen Standortes des autonom gesteuerten Fortbewegungsmittels oder des Fotografen bis zur Kameraposition KPn einen vorbestimmten Schwellenwert unterschreitet.

Wird im Verfahrensschritt S111 dagegen ermittelt, dass die Permutationsbewertungszahl PBZm der aktuellen Permutation Pm den vorgegebenen Permutationsbewertungsschwellenwert PBSW nicht überschreitet, dann erfolgt im Verfahrensschritt S113 die Überprüfung, ob die maximale Anzahl der Permutationen P bereits erreicht ist. Falls sämtliche Permutationen P der Fotostandortdatensätze FSD1 bis FSDn bereits durchlaufen wurden, dann erfolgt die Beendigung des erfindungsgemäßen Verfahrens. In diesem Fall kommt es zu keinem automatischen Durchführen einer Aktion, da keine Permutationsbewertungszahl PBZm der Permutationen P den erforderlichen Permutationsbewertungsschwellenwert PBSW erreicht hat, d.h. keine der Permutationen P der Fotostandortdatensätze FSD1 bis FSDn das erforderliche Maß für die Güte der Lichtverhältnisse dieser Permutation Pm der Fotostandortdatensätze FSD1 bis FSDn erreicht hat.

Wird im Verfahrensschritt S113 dagegen festgestellt, dass die maximale Anzahl der Permutationen Pm der Fotostandortdatensätze FSD1 bis FSDn noch nicht erreicht ist, dann erfolgt im Verfahrensschritt S114 das Inkrementieren der Laufvariablen m, die als Index für die aktuell zu bearbeitende Permutation Pm und gleichzeitig als Schleifenzähler m verwendet wird. Das erfindungsgemäße Verfahren wird anschließend mit dem nächsten Schleifendurchlauf im Verfahrensschritt S102 fortgesetzt, wo die nächste aktuelle Permutation Pm aus den Fotostandortdatensätzen FSD1 bis FSDn gebildet wird.

Im ersten Ausführungsbeispiel des erfindungsgemäßen Verfahrens erfolgt im Verfahrensschritt S111 die Auswahl jener Permutation Pm, deren Permutationsbewertungszahl PBZm den vorgegebenen Permutationsbewertungsschwellenwert PBSW überschreitet. Somit wird im Verfahrensschritt S112 eine Aktion mit jener Permutation Pm durchgeführt, die ein vorgegebenes Maß der Güte der Lichtverhältnisse erreicht und als ausgewählte Permutation Ps bezeichnet wird.

In einem alternativen Ausführungsbeispiel des erfindungsgemäßen Verfahrens kann im Verfahrensschritt S111 jedoch auch die Permutation Pm mit der maximalen Permutationsbewertungszahl PBZm zur Durchführung einer Aktion ausgewählt werden, wobei diese Aktion der beim Verfahrensschritt S112 beschriebenen Aktion entsprechen kann. In diesem alternativen Ausführungsbeispiel gilt dann die ausgewählte Permutation Pm und das durch diese Permutation Pm repräsentierte Maß der Güte der Lichtverhältnisse als optimal.

Das erfindungsgemäße Verfahren kann in eine beliebige Steuerungsvorrichtung innerhalb eines autonomen gesteuerten Fahrzeugs oder Fluggerätes implementiert sein. Unter Vorgabe einer Serie bestimmter fotografischer Objekte mit jeweils einer bestimmten Objektposition OP sowie jeweils einer bestimmten Kameraposition KP kann das erfindungsgemäße Verfahren in einer beliebigen erfindungsgemäßen Steuerungsvorrichtung an einem beliebigen Ort zu einem beliebigen Zeitpunkt durchgeführt werden. Mit der Auswahl eines beliebigen Anfangszeitpunktes TA ist die Optimierung der Eigenschaften einer Serie fotografischer Aufnahmen für einen Zeitraum in der Vergangenheit oder in der Zukunft möglich. Nach erfolgreicher Durchführung des erfindungsgemäßen Verfahrens erfolgt die automatische Ansteuerung eines autonomen Fahrzeugs oder Fluggerätes anhand der Routeninformationen, die aus der im Verfahrensschritt S111 ausgewählten Permutation Ps und deren zugeordneten Fotostandortdatensätzen FSD1 bis FSDn, d. h. aus den GPS-Koordinaten der jeweiligen Kameraposition KPn, gewonnen werden können. Eine Steuerungsvorrichtung kann dann die Kamera 10 beim Erreichen der GPS-Koordinaten der jeweiligen Kameraposition KPn automatisch auslösen oder den Fotografen informieren, dass die GPS-Koordinaten der jeweiligen Kameraposition KPn erreicht worden sind.

Alternativ kann das erfindungsgemäße Verfahren in eine beliebige Steuerungsvorrichtung mit einer Anzeigevorrichtung implementiert sein, insbesondere in ein Mobiltelefon, in ein Notebook oder in eine digitale Kamera. Nach erfolgreicher Durchführung des erfindungsgemäßen Verfahrens erfolgt auf einer Anzeigevorrichtung die automatische Anzeige der Routeninformationen, die aus der im Verfahrensschritt S111 ausgewählten Permutation Ps und deren zugeordneten Fotostandortdatensätzen FSD1 bis FSDn, d.h. aus den GPS-Koordinaten der jeweiligen Kameraposition KPn, gewonnen werden können. Die Anzeigevorrichtung kann den Fotografen dann beim Erreichen der GPS-Koordinaten der jeweiligen Kameraposition KPn automatisch informieren und ihn zum Auslösen der Kamera 10 automatisch auffordern bzw. die Kamera automatisch auslösen.

Voraussetzung hierfür ist eine kabellose oder kabelgebundene Datenverbindung zu einer Datenbank, um die zur Durchführung des Verfahrens notwendigen GPS-Daten (Global Positioning System) der Objektposition OP, d.h. der geografischen Position des fotografischen Objekts, und der Kameraposition KP der Kamera 10 zur Verfügung zu stellen.

Generell kann das erfindungsgemäße Verfahren auch als Computerprogramm implementiert sein, wenn es auf einem Computer ausgeführt wird.

Bezugszeichen

| | |
|---|---|
| 1 | fotografisches Objekt (Gebäude) |
| 2 | fotografisches Objekt (Landschaft mit Höhenlinien) |
| 4 | erste repräsentative Koordinate des fotografischen Objekts 1, 2 |
| 5 | zweite repräsentative Koordinate des fotografischen Objekts 1, 2 |
| 7 | Vektor durch die repräsentativen Objektkoordinaten 4 und 5 |
| 8 | Himmelsrichtung Nord als Vektor |
| 10 | Kamera |
| 11 | Vektor von der Kameraposition KP zum fotografischen Objekt 1, 2 |
| 13 | Vorzugsseite des fotografischen Objekts |
| 15 | Vektor, der den horizontalen Sonnenstand repräsentiert |
| 17 | Vektor, der den vertikalen Sonnenstand repräsentiert |
| 18 | Horizontalebene |

| | |
|---|---|
| A | Azimut (Horizontalwinkel) der Sonne |
| E | Elevation (Höhenwinkel) der Sonne |
| FS | Fotostandort |
| FSn | aktueller Fotostandort, beliebiger Fotostandort |
| FSDn | aktueller Fotostandortdatensatz, beliebiger Fotostandortdatensatz |
| GBZ | Gesamtbewertungszahl |
| GBZn | aktuelle Gesamtbewertungszahl, beliebige Gesamtbewertungszahl |
| GBZn(T) | aktuelle, zeitabhängige Gesamtbewertungszahl |
| GBZ1 | Gesamtbewertungszahl 1 |
| GBZ2 | Gesamtbewertungszahl 2 |
| GBZT1 | Gesamtbewertungszahl zum Zeitpunkt T1 |
| GBZT2 | Gesamtbewertungszahl zum Zeitpunkt T2 |

GBZT3    Gesamtbewertungszahl zum Zeitpunkt T3
KP       Kameraposition
KPn      beliebige Kameraposition
KP1      Kameraposition 1
KP2      Kameraposition 2
KW       Kamerawinkel zum fotografischen Objekt, d.h. Blickrichtung der Kamera 10
N        Himmelsrichtung Nord
OP       Objektposition, d.h. geografische Position des fotografischen Objekts 1, 2
OP1      Objektposition 1, d.h. geografische Position des fotografischen Objekts 1, 2
OP2      Objektposition 2, d.h. geografische Position des fotografischen Objekts 1, 2
OW       Objektwinkel, d.h. Ausrichtung des fotografischen Objekts 1, 2
P        Permutationen von Fotostandortdatensätzen FSD
Pm       aktuelle oder beliebige Permutation von Fotostandortdatensätzen FSD
Ps       ausgewählte Permutation von Fotostandortdatensätzen FSD
PBZm     aktuelle Permutationsbewertungszahl
PBSW     Permutationsbewertungsschwellenwert
S1       Sonnenstand 1
S2       Sonnenstand 2
T        aktueller Zeitpunkt
T1       Zeitpunkt T1
T2       Zeitpunkt T2
T3       Zeitpunkt T3
$\Delta$T       Zeitinkrement
TA       Anfangszeitpunkt
TE       Endzeitpunkt
TKP1     Zeitdauer zum Fotgrafieren an der Kameraposition KP 1
TKP2     Zeitdauer zum Fotgrafieren an der Kameraposition KP2
TF21     Zeitdauer für die Fortbewegung von der Kameraposition KP2 nach KP1
TF13     Zeitdauer für die Fortbewegung von der Kameraposition KP1 nach KP3

**Patentansprüche**

1.  Verfahren zum Optimieren von Eigenschaften einer Serie fotografischer Aufnahmen, umfassend die Verfahrensschritte:

    a) Bilden von m Permutationen (P) aus n Fotostandortdatensätzen (FSDn),
    b) Auswählen der ersten Permutation (P1) als aktuelle Permutation (Pm),
    c) Durchlaufen aller n Fotostandortdatensätze (FSDn) der aktuellen Permutation (Pm) in einer Reihenfolge, wie sie durch die aktuelle Permutation (Pm) vorgegeben ist, wobei für jeden Fotostandortdatensatz (FSDn) eine zeitabhängige Gesamtbewertungszahl (GBZn(T)) als Maß für die Güte der Lichtverhältnisse zum Zeitpunkt (T) am Fotostandort (FSn), der durch den Fotostandortdatensatz (FSDn) definiert ist, bestimmt wird,
    d) Aufsummieren aller zeitabhängigen Gesamtbewertungszahlen (GBZn(T)) jedes der n Fotostandortdatensätze (FSDn) zu einer aktuellen Permutationsbewertungszahl (PBZm), die der aktuellen Permutation (Pm) zugeordnet ist, wobei die aktuelle Permutationsbewertungszahl (PBZm) ein Gesamtmaß für die Güte der Lichtverhältnisse aller Fotostandorte (FS) ist, die durch die Fotostandortdatensätze (FSDn) der aktuellen Permutation (Pm) definiert sind,
    e) Wiederholen der Verfahrensschritte c) und d) für jeder der m Permutationen (P),
    f) Auswahl einer Permutation (Ps) aus der Gesamtheit der m Permutationen (P), wenn eine logische Bedingung erfüllt ist,
    g) Ausführen einer Aktion zum Fotografieren einer Serie fotografischer Aufnahmen an den Fotostandorten (FS), die durch die Fotostandortdatensätze (FSDn) der ausgewählten Permutation (Ps) definiert sind.

2.  Verfahren zum Optimieren von Eigenschaften einer Serie fotografischer Aufnahmen nach Anspruch 1, **dadurch gekennzeichnet, dass** m eine ganzzahlige Anzahl von Permutationen (P) mit m > 1 ist, dass n eine ganzzahlige Anzahl von Fotostandortdatensätzen (FSDn) mit n > 1 ist und dass sich die Anzahl m von Permutationen (P) aus der Anzahl n von Fotostandortdatensätzen (FSDn) gemäß der Formel m = n! ergibt.

3. Verfahren zum Optimieren von Eigenschaften einer Serie fotografischer Aufnahmen nach Anspruch 1, **dadurch gekennzeichnet, dass** die logische Bedingung erfüllt ist, wenn der ausgewählten Permutation (Ps) die höchste Permutationsbewertungszahl (PBZm) aller Permutationen P zugeordnet ist.

4. Verfahren zum Optimieren von Eigenschaften einer Serie fotografischer Aufnahmen nach Anspruch 1, **dadurch gekennzeichnet, dass** die logische Bedingung erfüllt ist, wenn die Permutationsbewertungszahl (PBZm) der ausgewählten Permutation (Ps) einen vorbestimmten Permutationsbewertungsschwellenwert (PBSW) überschreitet.

5. Verfahren zum Optimieren von Eigenschaften einer Serie fotografischer Aufnahmen nach Anspruch 1, **dadurch gekennzeichnet, dass** die auszuführende Aktion das Ansteuern eines autonom gesteuerten Fortbewegungsmittels, insbesondere ein autonom gesteuertes Fahrzeug oder ein autonom gesteuertes Fluggerät, umfasst.

6. Verfahren zum Optimieren von Eigenschaften einer Serie fotografischer Aufnahmen nach Anspruch 5, **dadurch gekennzeichnet, dass** das Ansteuern des autonom gesteuerten Fortbewegungsmittels basierend auf GPS-Koordinaten, die Bestandteil der Fotostandortdatensätze (FSDn) der ausgewählten Permutation (Ps) sind, erfolgt.

7. Verfahren zum Optimieren von Eigenschaften einer Serie fotografischer Aufnahmen nach Anspruch 1, **dadurch gekennzeichnet, dass** die auszuführende Aktion die Anzeige der GPS-Koordinaten, die Bestandteil der Fotostandortdatensätze (FSDn) der ausgewählten Permutation (Ps) sind, umfasst.

8. Verfahren zum Optimieren von Eigenschaften einer Serie fotografischer Aufnahmen nach Anspruch 6 oder 7, **dadurch gekennzeichnet, dass** bei Erreichen eines geografischen Standortes, der in einer definierten Entfernung zu den GPS-Koordinaten liegt, die Kamera (10) automatisch ausgelöst wird oder der Fotograf über das Erreichen des geografischen Standortes akustisch und/oder visuell informiert wird.

Fig. 1a)

Fig. 1b)

Fig. 2a)

Fig. 2b)

Fig. 2c)

Fig. 3

Fig. 4

Fig. 5

Fig. 6

Fig. 7

Fig. 8a)

```
                              ┌─────────────┐
                              │    Start    │
                              └──────┬──────┘
                                     ▼
        ┌─────────────────────────────────────────────┐
        │  Laufvariable für Permutationen P initialisieren   │   S101
        │                   m = 1                          │
        └─────────────────────┬───────────────────────┘
                              ▼
        ┌─────────────────────────────────────────────┐
        │  Aktuelle Permutation Pm aus Fotostandort-    │   S102
        │           datensätzen FSD bilden             │
        └─────────────────────┬───────────────────────┘
                              ▼
        ┌─────────────────────────────────────────────┐
        │  Laufvariable für Fotostandortdatensätze FSD  │   S103
        │            initialisieren; n = 1             │
        └─────────────────────┬───────────────────────┘
                              ▼
        ┌─────────────────────────────────────────────┐
        │   Anfangszeitpunkt TA festlegen; T = TA       │   S104
        └─────────────────────┬───────────────────────┘
                              ▼
        ┌─────────────────────────────────────────────┐
        │  Permutationsbewertungszahl PBZm initialisieren │  S105
        │                 PBZm = 0                      │
        └─────────────────────┬───────────────────────┘
```

S110

$$T = T + \Delta T_n$$

$$n = n + 1$$

S109

Gesamtbewertungszahl GBZn(T) des Fotostandsortdatensatzes FSDn bestimmen — S106

Permutationsberwertungszahl aufsummieren PBZm += GBZn(T) — S107

Nein — Letzter Fotostandort- datensatz FSD ? — S108

Ja

1

2

Fig. 8b)

S114   m = m + 1

Nein

S113   Letzte Permutation ?   ← Nein   PBZm > PBSW   S111

Ja   Ja

Aktion durchführen   S112

Ende

Europäisches
Patentamt

European
Patent Office

Office européen
des brevets

**EUROPÄISCHER RECHERCHENBERICHT**

Nummer der Anmeldung

**EP 22 00 0166**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Anonymous: "Planning a Multi-Stop Trip – Improve Photography", , 8. Mai 2015 (2015-05-08), XP093004693, Gefunden im Internet: URL:https://improvephotography.com/32806/planning-multi-stop-trip/ [gefunden am 2022-12-05] * das ganze Dokument * ----- | 1-8 | INV. H04N5/232 H04N5/235 G01C21/20 G05D1/00 |
| A | US 2013/050507 A1 (SYED ZIA [US] ET AL) 28. Februar 2013 (2013-02-28) * Abbildungen 4, 5, 8a, 8b * ----- | 1 | |

RECHERCHIERTE
SACHGEBIETE (IPC)

H04N
G01C
G05D

Der vorliegende Recherchenbericht wurde für alle Patentansprüche erstellt

| Recherchenort | Abschlußdatum der Recherche | Prüfer |
|---|---|---|
| München | 5. Dezember 2022 | Oelsner, Martin |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes
 Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 00 0166

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2022

| Im Recherchenbericht angeführtes Patentdokument | Datum der Veröffentlichung | Mitglied(er) der Patentfamilie | Datum der Veröffentlichung |
|---|---|---|---|
| US 2013050507 A1 | 28-02-2013 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011017564 A1
- DE 102019001910 B3